# EUROPEAN PATENT APPLICATION

(11) **EP 1 215 074 A2**
(43) Date of publication of application: **19.06.2002**
(21) Application number: 01129407.1
(22) Date of filing: 10.12.2001
(51) Int. Cl.: B60M 1/28

(54) **Vehicle for use in construction and maintenance work on overhead systems of railway, tramway, subway lines or the like**

(30) Priority: 12.12.2000 IT SV000061
(71) Applicant: Linea di Contatto S.r.l., 00012 Guidonia (Roma) (IT)
(72) Inventor: Cipriani, Alfredo, 00012 Guidonia (Roma) (IT); Cipriani, Enrico, 00012 Guidonia (Roma) (IT); Vannoni, Mauro, 50063 Figline Valdarno (FI) (IT)
(74) Representative: Karaghiosoff, Giorgio A.

(57) **Abstract**

The invention relates to a vehicle to be used in construction or maintenance work on overhead systems (17) of railway lines, or the like, comprising a truck whereon at least two platforms (8, 9) are mounted, which may be lifted enough to reach the uppermost parts of the structure (17), said platforms (8, 9) being provided in laterally staggered positions at symmetrically opposite sides with reference to the median longitudinal axis (10) of the vehicle, i.e. with reference to the area in which the contact wire of an overhead electrification line (17) runs, and each platform (8, 9) being able to be oscillated in the horizontal plane to such an extent that it can be displaced angularly outwards at least to a position in which it is perpendicular to the axis (10) of the vehicle. According to the invention, the axis of oscillation of each platform (8, 9) is preferably outside the platform (8, 9) and/or at a certain distance therefrom, and the platforms (8, 9) have such a size that, in an outwardly swung position through an angle of 90°, it is possible to cover the whole distance between a pair of trestles (16) or any structures for supporting the electrification overhead line, which is positioned symmetrically with respect to the axis of the track with no other side translational movement of the platforms (8, 9) or the like.

## Description

The invention relates to a vehicle to be used in construction or maintenance work on overhead systems of railway, tramway, subway lines, or the like, comprising a truck adapted to run on rails, whereon at least two operating platforms are fitted, which may be lifted enough to reach the uppermost parts of the suspension structure, or the like, and lowered, said platforms being provided in laterally staggered positions at symmetrically opposite sides with reference to the median longitudinal axis of the vehicle, i.e. with reference to the area in which the contact wire of an overhead electrification line runs, and in a position of non-interference with the wire, each platform being able to be swung in the horizontal plane to such an extent that it can be displaced angularly outwards at least to a position in which it is perpendicular to the median longitudinal axis of the vehicle.

As is known, the contact wire of an overhead electrification line is generally supported in a cantilever fashion by a bracket or other supporting structures which extend above it and even to a certain extent at one side of the track. Said contact wire typically runs within a volume substantially vertically in line with the center axis of the track. The known types of vehicles of the above described type generally allow to service rather satisfactorily the contact wire and the parts of the structure near it, i.e. all the elements disposed above and within the planform of the vehicle. In fact, these vehicles generally have at least two platforms having their own lifting means, generally one or more linear actuators, which allow it to be lifted to a sufficient extent, without interfering with the contact wire, thanks to their laterally staggered positions. However, these well-known vehicles do not satisfactorily solve the problem to service the parts disposed at the sides of the track, which fall outside the planform of the vehicle, for instance on the upper ends of the overhead electrification line supporting structures. In some cases, the problem is solved by swinging the platforms outwards in the horizontal plane, but through an angle not above 90° with reference to the median longitudinal axis of the vehicle. While this arrangement allows to somewhat expand the operating range of the platforms, it is not sufficient, because the axes of oscillation are situated within each of the platforms, particularly at a corner end thereof. In order to obviate this drawback, the actuators, and the platforms with them, are laterally translated outwards to a direction perpendicular to the axis of the vehicle. The lower end of each actuator is slidably fixed on guides. Therefore, this type of vehicle has a very complex construction and the arrangement of the platforms is limited to an outward oscillation of each of them through 90 degrees with respect to the median longitudinal axis of the vehicle.

In accordance with a further known type of vehicle being the subject of this invention, each platform has a pair of lifting actuators aligned along an axis parallel to the median longitudinal axis of the vehicle and articulated at their lower end to swing about the same axis parallel to the median longitudinal axis of the vehicle. The operating platforms are articulated at their two end sides to the upper ends of the two telescopic actuators to oscillate about an axis which is itself parallel to the longitudinal axis of the vehicle. The possibility to tilt the lifting means and to revert this tilting action by a complementary oscillation of the platform allows to service the uppermost parts of the structure, disposed at the sides of the track. Nevertheless, this second type of vehicle is also rather complex in terms of construction, and even in this case, the positioning potentiality for the platforms is limited to positions disposed along an axis perpendicular to the median longitudinal axis of the vehicle.

Hence, this invention has the object to obviate all the above drawbacks and to provide, by a simple and relatively inexpensive construction, a vehicle of the type described hereinbefore which allows to service in an optimized manner both the electrification wire and the parts of the structure disposed at an higher level than the vehicle itself, as well as the parts of the structure disposed at the sides of the track, i.e. of the vehicle, and not easily reachable, in conditions of higher safety and better operational functionality for the personnel charged of the overhead line maintenance and installation work. Particularly, the object of the invention is to enhance and diversify platform positioning capacities, by expanding the operating range thereof, without having to translate them, and/or to tilt the lifting means and/or to repeatedly displace the vehicle along the track.

The invention achieves the above purposes by providing a vehicle of the type described hereinbefore wherein the axis of oscillation of each platform is preferably outside the platform and/or at a certain distance therefrom. It is apparent that, thanks to this simple arrangement, the oscillation of a platform within the horizontal plane will provide a wider operating range as compared with the one associated with the same platform, with the axis of oscillation being provided in an internal position.

At least one platform may have such a size that, when it is displaced outwards through 90 degrees, with reference to the median longitudinal axis of the vehicle, the whole distance required to service a trestle or parts of an overhead structure, or the like, disposed at the sides of the track of a railway line, may be covered without having to further move the platform in side translation and/or to tilt the lifting means and/or the like outwards.

Advantageously, both platforms may have such a size that, when the platforms are swung outwardly through 90 degrees on opposite sides with reference to the median longitudinal axis of the vehicle, the whole distance required to service a pair of trestles or structures disposed symmetrically at opposite sides with reference to the center line of a railway line can be covered.

The axes of oscillation of the platforms are perpendicular to the floor of the vehicle, placed within its surface and in a symmetrical position with reference to the median longitudinal axis of the vehicle.

The two platforms may have equal or different shapes and/or sizes, with reference to the shapes and sizes of the walkable surface. In accordance with a preferred embodiment of the invention, they have the same rectangular shape and the same size.

The means for lifting/lowering each platform may consist of at least one telescopic linear actuator, which may be of the oil hydraulic, pneumatic or other similar type.

The axis of oscillation of each platform may either coincide with or be close to the axis of its respective linear lifting actuator.

According to a preferred embodiment of the invention, which will be described in further detail hereafter, the two linear platform lifting actuators are provided in a substantially intermediate position between the median transverse axis of the vehicle and a first end thereof.

Each linear actuator may have, at its upper end, a bracket-like element for cantilever support of a platform.

Advantageously, the angle of oscillation within the horizontal plane of each platform may be set from a minimum of 0 degrees and a maximum of 360 degrees, i.e. each of the two platforms may be freely swung within the horizontal plane, which is an apparent improvement of the possibilities provided by the above embodiments.

When the platforms are swung through 0 degrees, i.e. in the unswung position, the two platforms can be turned toward the second end of the vehicle, with their median longitudinal axes being parallel to each other and to the median longitudinal axis of the vehicle.

The vehicle may have manual or automatic means to mechanically lock each of the two platforms in its respective swung position, for instance with respect to the position of the vehicle relative to the structure of the line, in such a manner that any interference with these structures or with running trains may be prevented.

Means for manually or automatically restricting the angles of oscillation of the platforms may be further provided. These means, which account for the angles of oscillation of one platform and of the other, thereby prevent any collision between the two platforms, particularly when the latter are substantially at the same level or at such levels that they can interfere with each other.

The platform displacement system described hereinbefore, allows the platforms to be positioned in a various and flexible manner. Particularly, these may be oscillated laterally outwards and on opposite sides with reference to the median longitudinal axis of the vehicle, particularly in positions perpendicular thereto. Alternatively, the two platforms may be both swung toward the same side of the vehicle. Particularly, the two platforms may be swung through the same angle or through similar angles, when they are at different heights or anyway in mutual non-interference positions, e.g. to service parts of a trestle positioned at different heights. Also, when the platforms are swung through 0 and 180 degrees respectively, the arrangement of the platforms is such that the one forms the operating extension of the other. This arrangement allows to service a considerably long portion of the line, substantially equal to or slightly longer than the sum of the axial dimensions of the two platforms without having to displace the vehicle in any manner. It shall be noted that, when the two platforms are placed at different heights and in mutual non-interference positions, they may be oscillated through such an angle that their surfaces overlap at least partly, i.e. may be oscillated freely in any position.

In accordance with an advantageous improvement, at least one platform, but preferably each of the two platforms may be fitted on its respective cantilever bracket by such means that it can be translated transversely in both directions through a certain extent, with reference to the median longitudinal axis of the bracket.

These means may consist of at least one pair of saddles provided on each platform and of at least one pair of corresponding sliding guides provided on each corresponding bracket or other type of support, or vice versa. The platforms may be translated manually or by mechanical driving means, e.g. of the hydraulic, pneumatic, oil hydraulic type.

Thanks to this arrangement, in a parallel and unswung condition of the platforms, each of the two platforms may be translated toward the other and both may be brought to mutual contact, to allow the passage of an operator from one platform to the other and to reduce the side dimension of the platforms within the allowed planform of the vehicle.

According to an additional advantageous improvement, at least one of the platforms, but preferably each of the platforms, may have an axial extension member, with reference to the longitudinal axis of the platform, which may be extended outwards in such a manner as to form an extension of the walkable plane of the platform and to further expand the operating range thereof. This extension member may be supported, for instance on sliding guides, and be extended outwards manually or with mechanical means. There may be further provided means for locking end-of-stroke positions or intermediate positions.

Advantageously, the two platforms may be swung according to the previously described methods even in the extended condition of the extension members.

According to a further advantageous improvement, separate means for lifting/lowering dedicated tools or units may be provided, to assist installation or maintenance operations on the line.

In accordance with a preferred embodiment, an oil hydraulic, pneumatic, or other type of telescopically extendable and tool-carrying actuator cylinder may be provided, disposed in a substantially intermediate area relative to the two linear platform lifting actuators.

An additional pair of tool-carrying actuator cylinders may be provided, substantially provided in an intermediate position between the median transverse axis of the vehicle and the second end thereof, and placed symmetrically at opposite sides with reference to the median longitudinal axis of the vehicle.

There may be additionally provided at least one but preferably a pair of whirly cranes, to lift materials or support tools for use to work on the line. Each crane may be provided at a corner area of the above first end of the vehicle.

Each actuator cylinder and each whirly crane may have, at their upper end, means for removably securing a tool. These means may consist of standardized holes or interlocks for a tool engaging or fastening foot. These tools may include, for instance, a unit for guiding and slidably supporting carrying cables or contact wires and/or a unit for temporarily detaching and supporting (far from the supporting arms) the contact wire and/or the carrying cable.

The vehicle is of the motor-driven type but may also have a dedicated operating cab and may be pulled or pushed by a separate tractor.

The advantages of the present invention are self-evident from the above description.

The arrangement of the liftable operating platforms allows to reach such heights as to allow the service personnel to operate in full comfort and safety even on the highest parts of the overhead electrification line supporting structures, without interfering with the electrification wire. The means for handling and displacing the operating platforms are simple, safe and comparatively inexpensive, and may be easily found on the market. The free oscillation capacity of the platforms in the horizontal plane allows a better versatility and comfort of the vehicle and advantageously allows to reach parts of the structure disposed at the sides of the track and in relatively high positions, thereby allowing, when required, to operate with a considerable number of persons at the same time. The provision of additional means for lifting auxiliary interchangeable and modular means, provides a better operational comfort and ensures a better performance of installation operations, in a reduced time and with an increased safety for the operators. The vehicle of the invention is much simpler in construction than the above vehicles, because it does not need means for transversely translating the platforms or means for tilting the lifting actuators. With reference to the latter known solution, it has to be further considered that, below the platform, in the outwardly swung condition, there is no lateral hindrance by the lifting structures because their size is contained within the planform of the vehicle.

The optimized flexibility of the vehicle allows a use thereof in any operating condition, e.g. in tunnels, subway lines, narrow gauge lines, etc...

Further characteristics and improvements will form the subject of the dependent claims.
The characteristics of the invention and the advantages deriving therefrom will appear more clearly from the following detailed description of one embodiment, illustrated without limitation in the annexed drawings, in which:
Fig. 1 is a side view of the vehicle according to the invention, the operating platforms being in the unswung and unlifted condition.

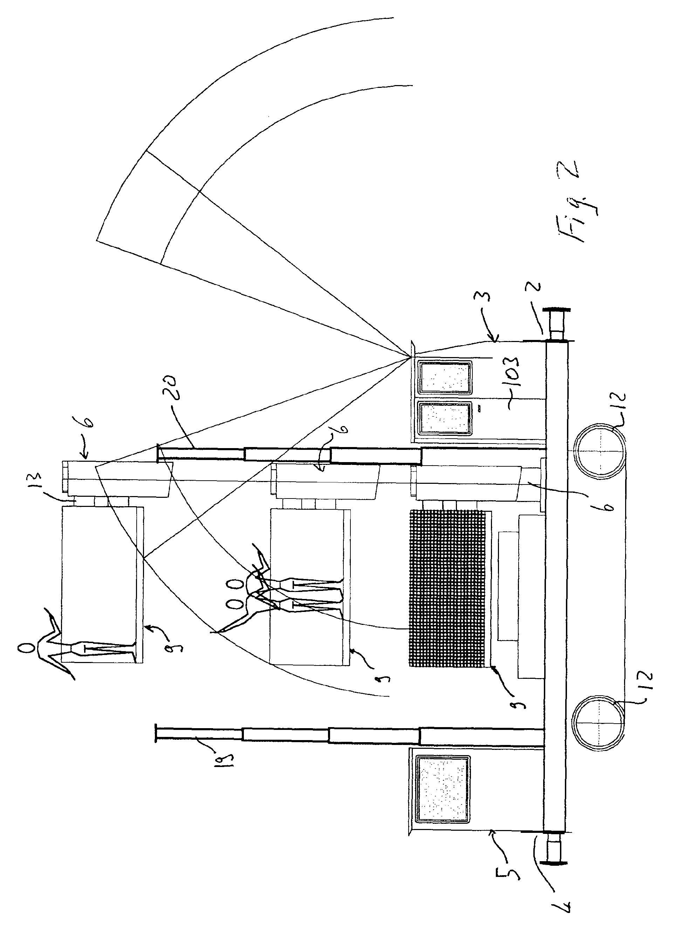

Fig. 2 is the same view as Fig. 1, with a platform placed at different lifting heights.
Fig. 3 is a front view of a first end (right half of the Figure), with the platforms in unswung and unlifted conditions, and a front view of a second end (left half of the Figure), with the platforms in a lifted position, swung through 90 degrees outwards, of a vehicle of the invention, on a schematic railway line with a general suspension structure for overhead electrification lines.

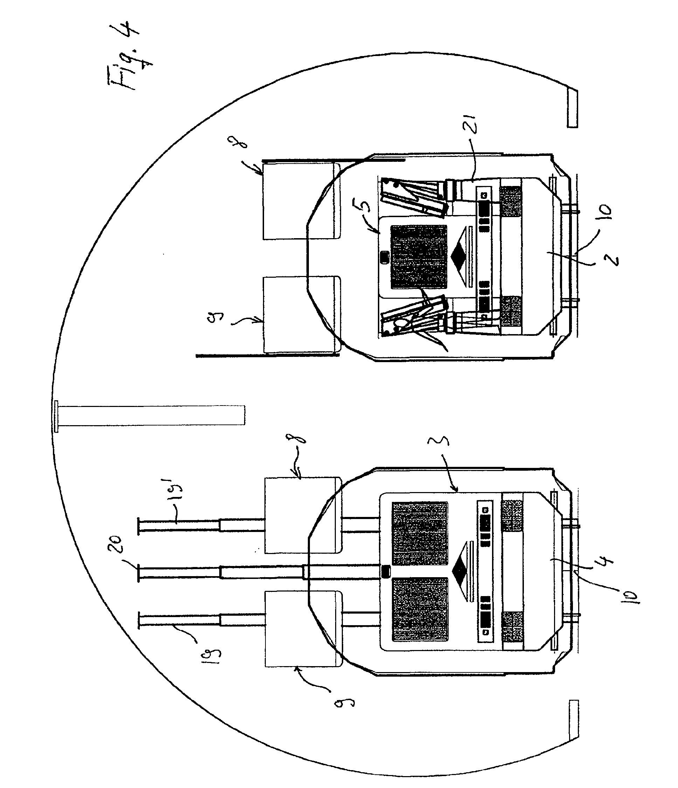

Fig. 4 shows the same views as Fig. 3, with the platforms in a partial lifting condition, in a tunnel portion of a schematic railway line.

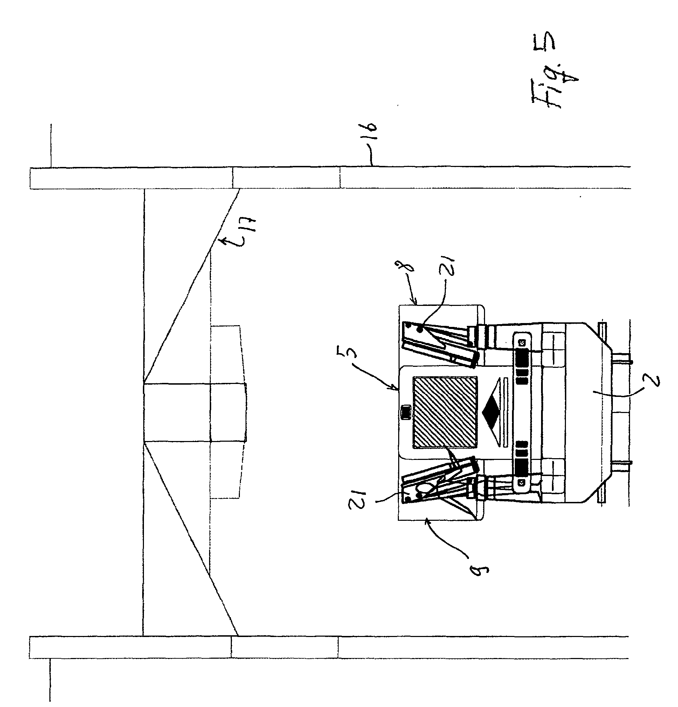

Fig. 5 is a front view of a first end of the vehicle according to the invention, with the platforms being in the unswung and unlifted condition.

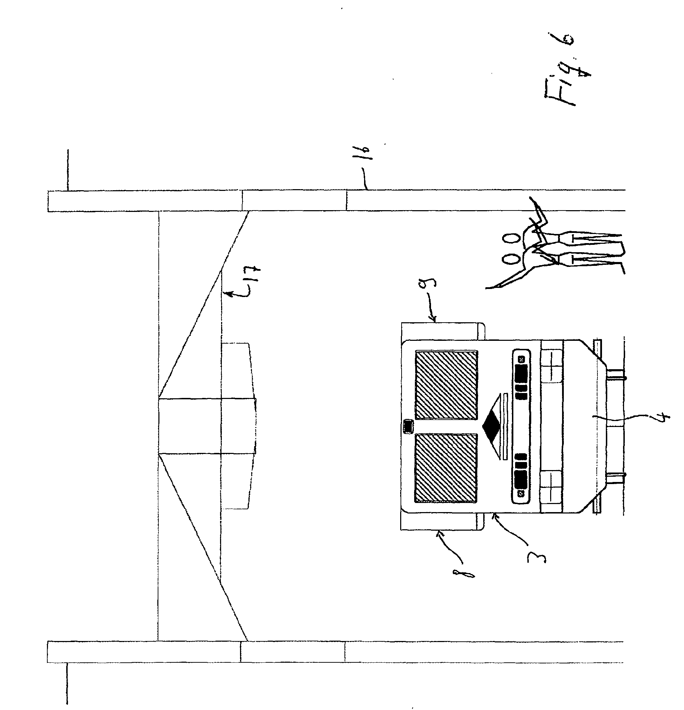

Fig. 6 is a front view of a second end of the vehicle according to the invention, with the platforms being in the unswung and unlifted condition.
Fig. 7 shows the operating ranges of the two platforms, with the respective extension elements being in the extended condition.
Figs. 8 to 16 are top plan views of the vehicle according to the invention, with the platforms in different oscillation positions in the horizontal plane.

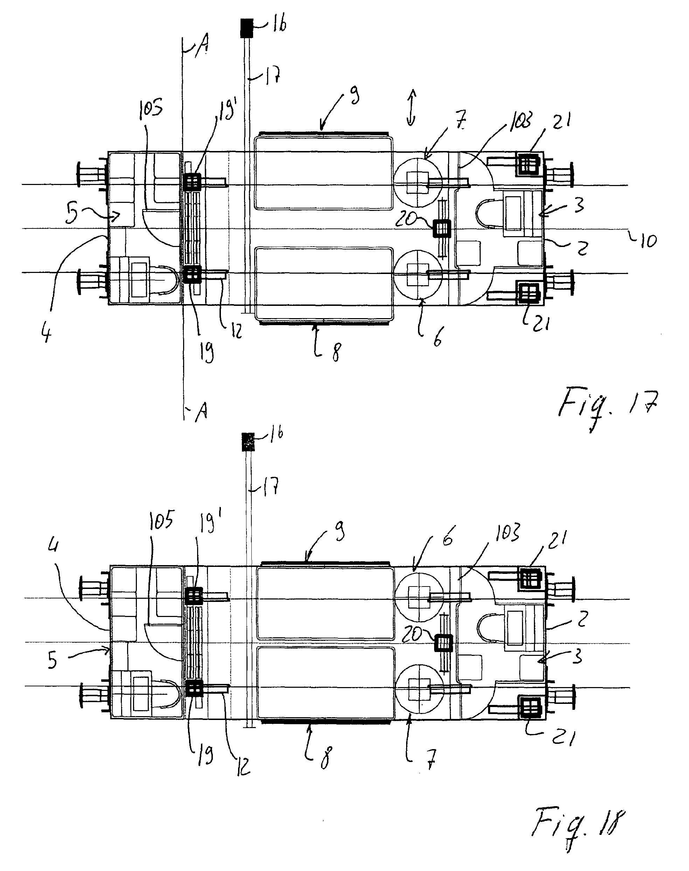

Fig. 17 is a top plan view of the vehicle according to the invention, the platforms being in the unswung condition.
Fig. 18 is the same view as Fig. 17, with the platforms being in the inward and approached translated condition.
Fig. 19 is a side view of a platform and of the translation means in the transverse direction with respect with the supporting bracket.
Fig. 20 is a sectional view A as taken across line (I-II) A - A of Fig. 17.
Figs. 21 through 27 show, like the previous Figures, a vehicle according to the invention which has a single platform.

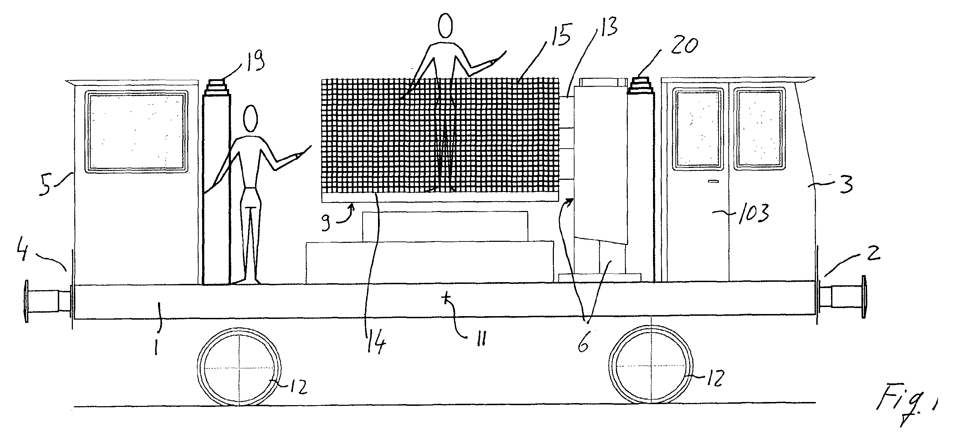

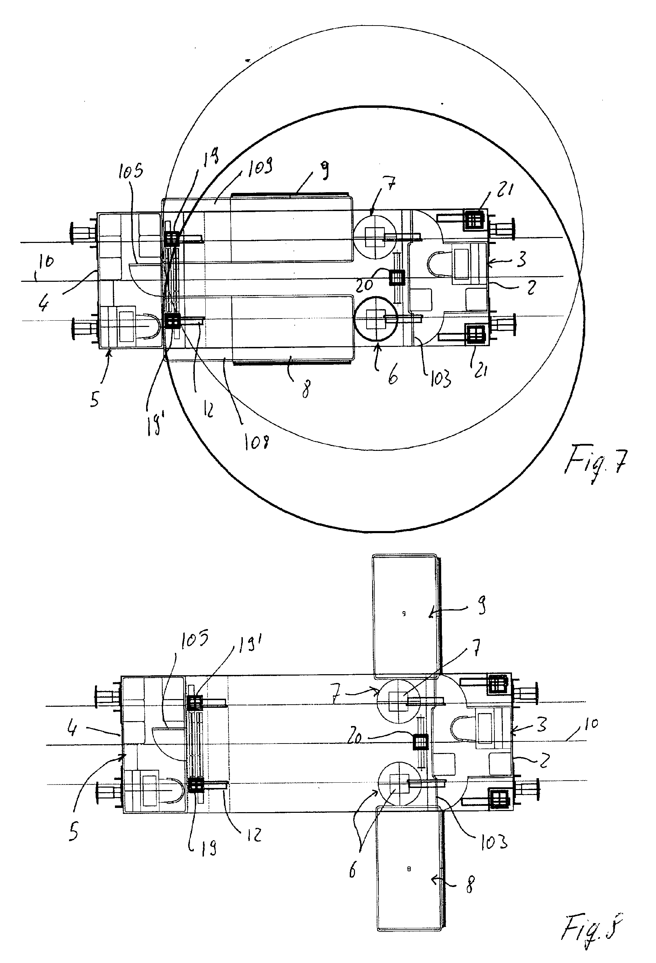

Referring to the figures, a railway vehicle according to the invention, in this embodiment being provided with its own propelling and driving means, includes a floor 1. In the proximity of a first end 2 of the floor 1, a one-man operating cab 3 is provided, placed in a central position, with reference to the median longitudinal axis of the vehicle and provided with side access doors 103. In the proximity of the second end 4, a second two man operating cab 5 is provided, which has a width substantially equal to the one of the floor 1, and provided with a central door 104. Obviously, different solutions may be also provided, for instance having a single operating cab, or in which the vehicle is not provided with a dedicated operating cab but only equipped with a control panel.
With particular reference to Figures 1 and 7, a first pair of linear actuators 6 and 7 is provided to lift an operating platform 8 and 9 respectively. Said actuators 6 and 7, which may be for instance of the oil hydraulic or pneumatic type, are provided in a laterally staggered position, symmetric to the median longitudinal axis 10 of the vehicle, and in a substantially intermediate position between the median transverse axis 11 of the vehicle and the first end 2. In the illustrated embodiment, these are secured to the floor 1 in the proximity of the axis of rotation of a first pair of wheels 12. The axis of each actuator 6, 7, i.e. the direction in which each platform 8, 9 is lifted, is perpendicular to the floor 1.

At the upper end of each lifting actuator 6, 7 a bracket 13 is provided for cantilever support of a platform 8, 9. Each platform consists of a walkable surface 14, particularly having a rectangular shape, and of a peripheral protection net or balustrade 15, hence it has a basket-like shape. Each platform 8, 9 is fitted onto its respective bracket 13 in such a position that its median longitudinal axis is parallel or corresponding to the median longitudinal axis of the bracket 13. Each bracket 13 can swing freely in the horizontal plane about an axis which substantially corresponds to the axis of the lifting actuator 6, 7, wherefore (Fig. 7) each of the two platforms 8, 9 may be swung in the horizontal plane through an angle which may be set from a minimum of 0 degrees to a maximum of 360 degrees. The two angles of 0 and 360 degrees correspond to the same unswung condition of the platforms 8, 9, as shown, for instance, in Fig. 7. In this condition, the two platforms 8, 9 are in parallel positions, turned toward the second end 4 of the vehicle. According to an advantageous improvement, each of the two platforms 8, 9 is provided with an axial extension element 108, 109 of the walkable surface 14, to increase the size of the walkable surface 14 and, as a result, the operating range of the platform 8, 9. This extension element 108, 109 may be telescopically extended in the axial direction, wholly or partly, when required, and be retracted thereafter.

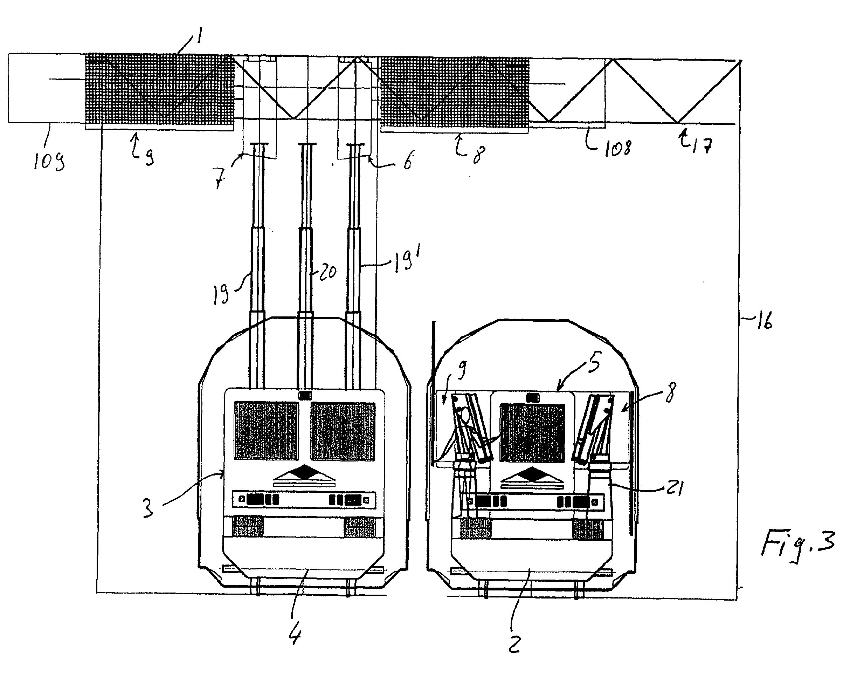

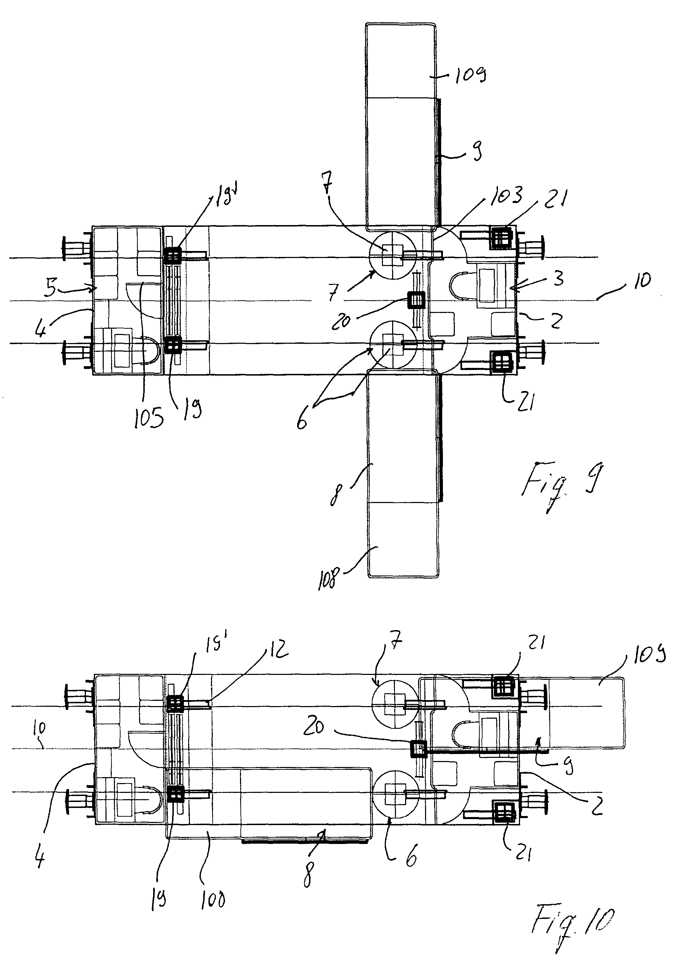

In Fig. 7, the two platforms 8, 9 are shown in the unswung condition and with the two extension elements 108, 109 in the extended condition. In Fig. 8, the two platforms 8, 9 appear to be outwardly swung through 90 degrees, whereas in Fig. 9 the two platforms are outwardly swung through 90 degrees with their respective extension elements 108, 109 in the extended condition. As is apparent from Fig. 3 (left half), the staggered position of the platforms 8, 9 with reference to the median longitudinal axis 10 of the vehicle allows to reach the higher parts of the suspension structure 17 for an overhead electrification line, without interfering with the wire. In fact, the wire typically runs along an area which corresponds to the median longitudinal axis 10 of the vehicle, corresponding in turn to the center line of the railway line. Moreover, the capacity of the two platforms 8, 9, to swing outwards particularly through 90 degrees, and to simultaneously extend one or both extension elements 108, 109, allows to reach structures placed at the sides of the track, without having to translate the lifting actuators 6, 7 and/or to tilt them outwards.

In Fig. 10, a platform 9 is shown in the unswung condition, whereas the platform 8 is swung through 180 degrees. Both platforms 8, 9 have their respective extension elements 108, 109 in the extended condition. It is apparent that, in this condition, each platform 8, 9 forms the operational extension of the other, and that it is possible to service a portion of the railway line which has the same length as or is slightly longer than the sum of the axial dimensions of the two platforms 8, 9 without having to displace the vehicle.

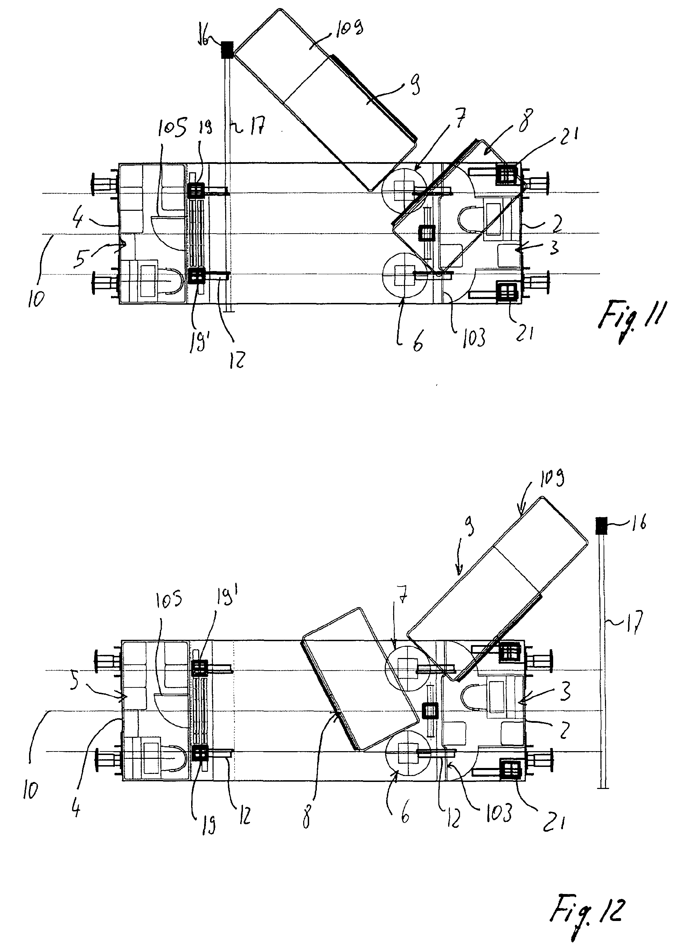

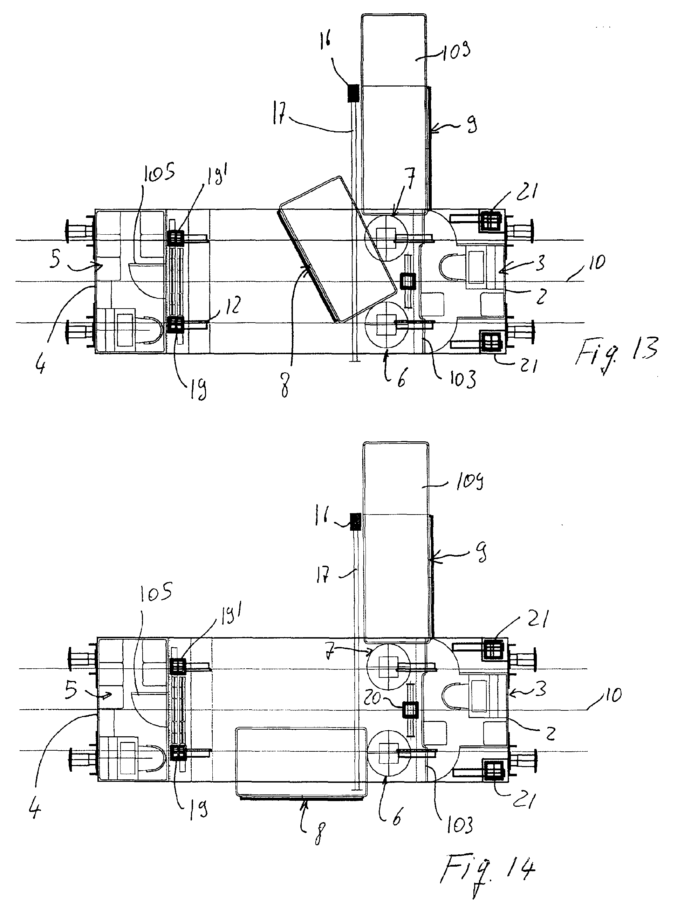

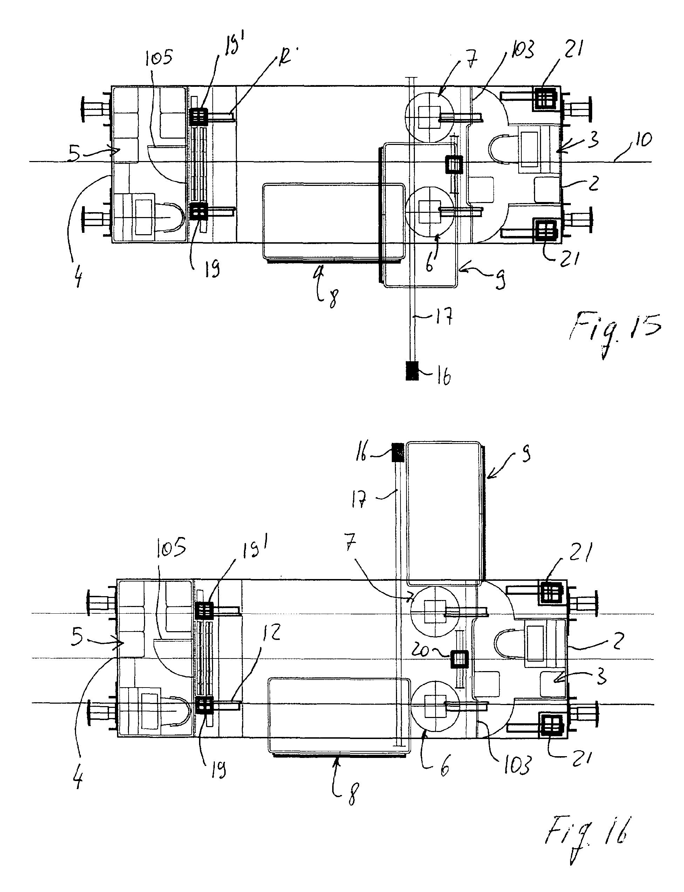

In Fig. 11, a platform 9 appears to be swung through about 45 degrees, and with the extension element 109 in the extended condition, for servicing a trestle 16 of a railway line which is disposed at one side of the track, whereas the other platform 8 appears to be swung through about 135 degrees and with the extension element 108 in the unextended condition. Here again, the personnel on the platform 8 is apparently able to interact and provide assistance and/or tools to the personnel on the platform 9, directly engaged in the service work. In Fig. 12, the platform 9 is oscillated through about 135 degrees, and with the extension element 109 in the extended condition, whereas the platform 8 appears to be oscillated through about 45 degrees. The considerations proposed about Fig. 11 will be also applicable in this case. In Fig. 13, the platform 9 appears to be outwardly oscillated through about 90 degrees, and with the extension element 109 in the extended condition, for servicing a trestle 16, whereas the platform 8 appears to be oscillated through about 45 degrees for simultaneously servicing parts of the suspension structure 17 being placed above the vehicle. In Figures 14 and 16, the platform 9 is outwardly oscillated through 90 degrees for servicing a trestle 16, whereas the other platform 8 is in the unswung condition. Particularly, in Fig. 14 the platform 9 has the extension element 109 in the extended condition. In Fig. 15, the platform 8 is in the unswung condition, whereas the platform 9 is swung through about 270 degrees to service parts of the overhead structure 17. It shall be noted that, in this case, the surfaces of the two platforms 8, 9 appear to partly overlap. This is possible when they are at different heights and in non interference positions. This consideration will be also applicable to Fig. 7.

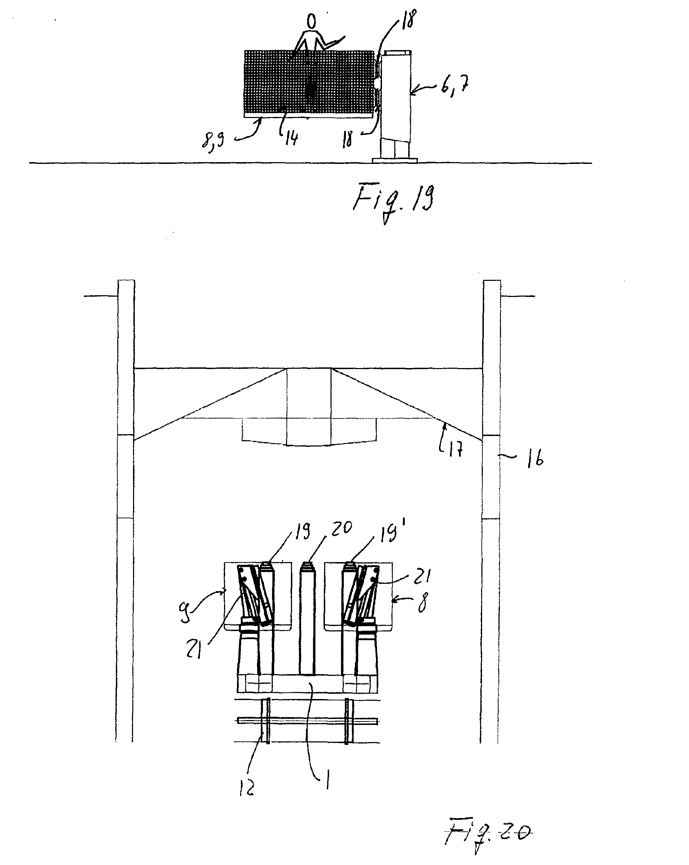

Now, with reference to Figs. 18 and 19, the platforms 8 and 9 are arranged to be secured to the upper ends of the telescopic actuators for lifting them 6, 7 by means of a pair of saddles 18 which slide transversely in a pair of corresponding guides. The guides and the saddles 18 allow a translational movement of each platform 8, 9 transversely to the longitudinal axis of the platform 8 and 9. This arrangement advantageously allows to approach the two platforms 8, 9 in parallel positions when the latter are in the unswung condition, thereby allowing the service personnel to pass from one platform to the other without having to get down from the platform and get up again. Furthermore, it is also advantageously possible to reduce the lateral dimensions of the platforms 8, 9 within the planform of the vehicle, for instance when the latter is moved.

Now with reference to Fig. 7, the preferred illustrated embodiment of the vehicle according to the invention advantageously comprises auxiliary means for lifting/lowering dedicated tools or units, to assist installation or maintenance operations on the line. These means consist of a pair of linear actuators 19, 19', situated in the proximity of the two man operating cab and placed in symmetrically staggered positions, on opposite sides with reference to the median longitudinal axis 10 of the vehicle. A third linear actuator 20 is provided in a substantially intermediate position between the actuators 6 and 7 for lifting the platforms 8, 9. Again, these actuators 19, 19', 20 may be for instance of the oil hydraulic, pneumatic or other type. At each corner area of the floor 1 placed in the proximity of the first end 1, a preferably whirly crane 21, 21' is provided. The tools (not shown), carried by the upper end of the actuators 19, 19', 20 and/or by the cranes 21, 21' may include, for instance, a unit for guiding and slidably supporting cables for carrying the contact wire and/or a unit for temporarily detaching and supporting far from the supporting arms the contact wire and/or the carrying cable, which devices are known per se.

Obviously, the invention is not limited to the embodiment described and illustrated herein, but may be greatly varied. For example, the means 6, 7 for lifting the platforms 8, 9 may be arranged to be slidable, for instance in the transverse direction, with respect to the floor 1 of the vehicle, to further expand the operating range of the platforms 8, 9.

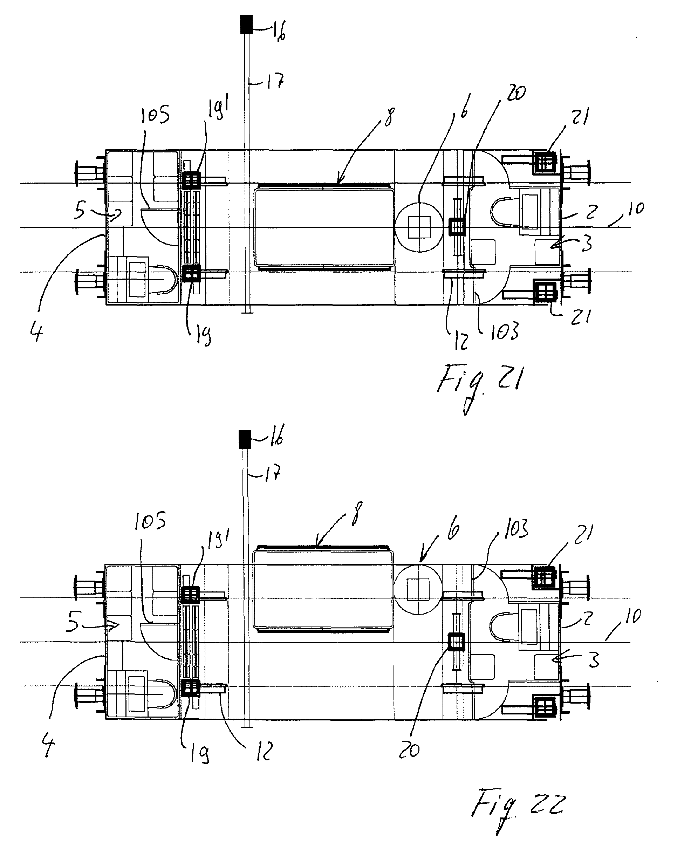

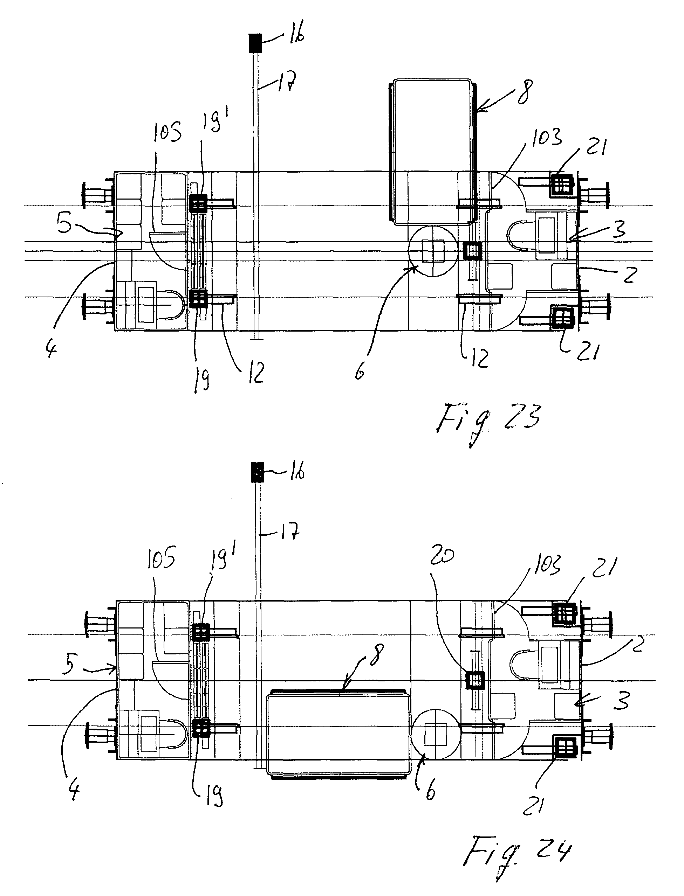

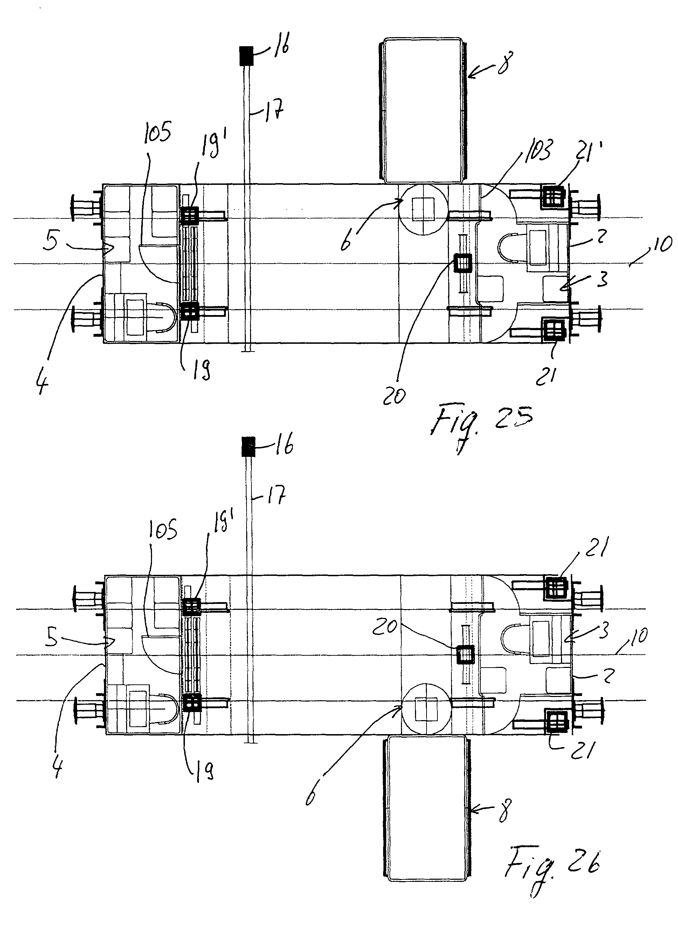

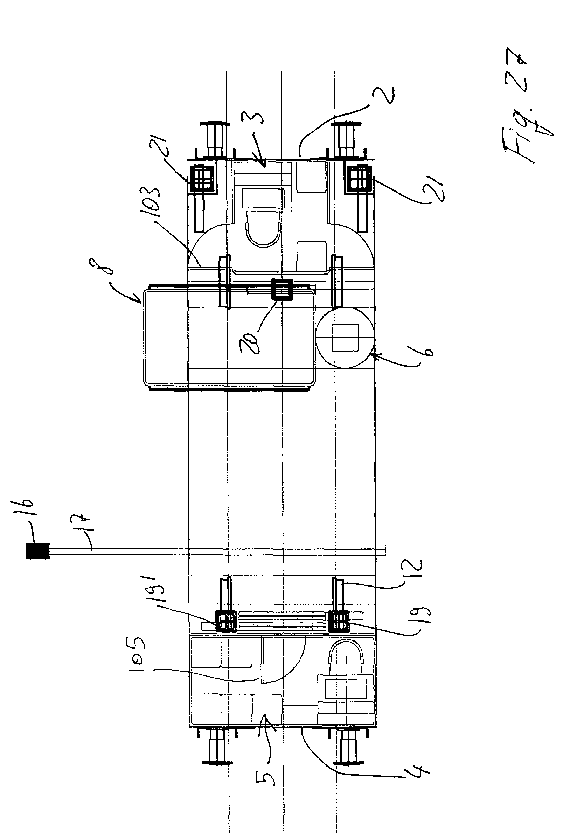

The invention also relates to a vehicle such as the one described hereinbefore, wherein, instead of two platforms, a single platform is provided, having lifting and rotating means, whose supporting base on the floor may slide transversely from one side to the other of the floor. Figures 21 through 27 show a few configurations of the vehicle according to this possible different application. Thanks to the possibility to slide the lifting linear actuator base on the floor of the vehicle, transverse to the track and by means of mechanical or other hydraulic actuators, the single platform may be made to take all the positions taken separately by the two platforms of the original solution. In addition, an array of new positions may be also taken by the single platform for all the intermediate positions between the two end positions of the allowed transverse stroke.

The two cranes may be also replaced by a single crane to be positioned, thanks to a device like the one of the single platform, at the selected operating side. The platform and the lifting means may be made in exactly the same manner as that of each of the two platforms of the above vehicle. In this case, the platform may have such a size that a rotation thereof allows to reach, transverse to the axis of the track, any element of the structure of the railway line. Moreover, the platform may be also arranged to be mounted with its axis of rotation coincident with the axis of the lifting means or in an intermediate position with respect thereto. All this without departure from the guiding principle disclosed above and claimed below.

## Claims

1. A vehicle to be used in construction or maintenance work on overhead railway systems (17) of railway, tramway, subway lines, or the like, comprising a truck adapted to run on rails, whereon at least two operating platforms (8, 9) are fitted, which may be lifted enough to reach the uppermost parts of the suspension structure (17), or the like, and lowered, said platforms (8, 9) being provided in laterally staggered positions at symmetrically opposite sides with reference to the median longitudinal axis (10) of the vehicle, i.e. with reference to the area in which the contact wire of an overhead electrification line runs, and in a position of non-interference with the wire, each platform (8, 9) being able to be swung in the horizontal plane to such an extent that it can be displaced angularly outwards at least to a position in which it is perpendicular to the median longitudinal axis (10) of the vehicle, **characterized in that** the axis of oscillation of each platform (8, 9) is outside the platform (8, 9) and/or at a certain distance therefrom.

2. A vehicle as claimed in claim 1, **characterized in that** at least one platform (8, 9) has such a size that, when it is displaced outwards through 90 degrees, with reference to the median longitudinal axis (10) of the vehicle, the whole distance required to service a trestle (16) or parts of an overhead structure (17), or the like, disposed at the sides of the track of a railway line, may be covered without having to further move the platform (8, 9) in side translation or the like.

3. A vehicle as claimed in claims 1 and 2, **characterized in that** both platforms (8, 9) have such a size that, when the platforms (8, 9) are swung outwardly through 90 degrees on opposite sides with reference to the median longitudinal axis (10) of the vehicle, the whole distance required to service a pair of trestles (16) disposed symmetrically at opposite sides with reference to the center line of a railway line can be covered.

4. A vehicle as claimed in one or more of the preceding claims, **characterized in that** the axes of oscillation of the platforms (8, 9) are perpendicular to the floor (1) of the vehicle.

5. A vehicle as claimed in one or more of the preceding claims, **characterized in that** the axes of oscillation of the platforms (8, 9) are provided inside the surface of the floor (1) of the vehicle.

6. A vehicle as claimed in one or more of the preceding claims, **characterized in that** the axes of oscillation of the platforms (8, 9) are symmetrical to the median longitudinal axis (10) of the vehicle.

7. A vehicle as claimed in one or more of the preceding claims, **characterized in that** the two platforms (8, 9) may have equal or different shapes and/or sizes, with reference to the shapes and sizes of the walkable surface, but preferably have the same shape, i.e. rectangular, and the same size.

8. A vehicle as claimed in one or more of the preceding claims, **characterized in that** the means for lifting/lowering each platform (8, 9) are at least one linear oil hydraulic, pneumatic, or similar actuators, of the telescopic type.

9. A vehicle as claimed in one or more of the preceding claims, **characterized in that** the axis of oscillation of each platform (8, 9) is coincident with or close to the axis of its respective linear lifting actuator (6, 7).

10. A vehicle as claimed in one or more of the preceding claims, **characterized in that** the two linear platform lifting actuators (6, 7) are provided in a substantially intermediate position between the median transverse axis of the vehicle and a first end (2) thereof.

11. A vehicle as claimed in one or more of the preceding claims, **characterized in that** each linear actuator (6, 7) may have, at its upper end, a bracket-like element (13) for cantilever support of a platform (8, 9).

12. A vehicle as claimed in one or more of the preceding claims, **characterized in that** the angle of oscillation in the horizontal plane of each platform (8, 9) may be set from a minimum of 0 degrees and a maximum of 360 degrees.

13. A vehicle as claimed in one or more of the preceding claims, **characterized in that**, when the platforms (8, 9) are swung through 0 degrees, i.e. in the unswung position, the two platforms (8, 9) are turned toward the second end (4) of the vehicle, with their median longitudinal axes being parallel to each other and to the median longitudinal axis (10) of the vehicle.

14. A vehicle as claimed in one or more of the preceding claims, **characterized in that** it has manual or automatic means to mechanically lock each of the two platforms (8, 9) in its respective swung position, for instance with respect to the position of the vehicle relative to the structures (16, 17) of the line, in such a manner that any interference with these structures (16, 17) or with running trains may be prevented.

15. A vehicle as claimed in one or more of the preceding claims, **characterized in that** there are provided means for manually or automatically limiting the angles of oscillation of the platforms (8, 9) which, by accounting for the angles of oscillation of one platform or the other, prevent any collision between the two platforms (8, 9), particularly when the latter are substantially at the same level or at such levels that they can interfere with each other.

16. A vehicle as claimed in one or more of the preceding claims, **characterized in that** the two platforms (8, 9) may be oscillated laterally outwards and on opposite sides with reference to the median longitudinal axis (10) of the vehicle particularly in positions perpendicular thereto.

17. A vehicle as claimed in one or more of the preceding claims, **characterized in that** the two platforms (8, 9) may be both swung axes toward the same side of the vehicle.

18. A vehicle as claimed in one or more of the preceding claims, **characterized in that** when the platforms (8, 9) are swung through 0 and 180 degrees respectively, the arrangement of the platforms (8, 9) is such that the one forms substantially the operating extension of the other.

19. A vehicle as claimed in one or more of the preceding claims, **characterized in that**, when the two platforms (8, 9) are placed at different heights and in mutual non-interference positions, they may be swung through such an angle that their surfaces overlap at least partly.

20. A vehicle as claimed in one or more of the preceding claims, **characterized in that** at least one platform (8, 9), but preferably each of the two platforms (8, 9) is fitted on its respective cantilever bracket (13) by such means (18) that it can be translated transversely in both directions through a certain extent, with reference to the median longitudinal axis of the bracket (13).

21. A vehicle as claimed in claim 20, **characterized in that** said means may consist of at least a pair of saddles (18) provided on each platform (8, 9) and of at least a pair of corresponding sliding guides fixed on the upper ends of the telescopic lifting actuators thereof 6 and 7, or vice versa.

22. A vehicle as claimed in claims 20 and 21, **characterized in that**, in a parallel and unswung condition of the platforms (8, 9), each of the two platforms (8, 9) may be translated toward the other and both may be brought to mutual contact, to allow the passage of an operator from one platform (8, 9) to the other and to reduce the side dimension of the platforms (8, 9) within the allowed planform of the vehicle.

23. A vehicle as claimed in one or more of the preceding claims, **characterized in that** at least one of the platforms (8, 9), but preferably each of the platforms (8, 9), has an axial extension member (108, 109), with reference to the longitudinal axis of the platform (8, 9), which may be extended outwards in such a manner as to form an extension of the walkable plane (14) of the platform (8, 9) and to further expand the operating range thereof.

24. A vehicle as claimed in one or more of the preceding claims, **characterized in that** there are provided manual or automatic means for extending/retracting the extension elements (108, 109) of the platforms (8, 9).

25. A vehicle as claimed in one or more of the preceding claims, **characterized in that** the two platforms (8, 9) may be swung in the above claimed modes even when the extension elements (108, 109) are in the extended condition.

26. A vehicle as claimed in one or more of the preceding claims, **characterized in that** separate means (19, 19', 20, 21, 21') for lifting/lowering dedicated tools or units may be provided, to assist installation or maintenance operations on the line.

27. A vehicle as claimed in one or more of the preceding claims, **characterized in that** an oil hydraulic, pneumatic, or other type of telescopically extendable and tool-carrying actuator cylinder is provided, disposed in a substantially intermediate area relative to the two linear actuators (6, 7) for lifting the platforms (8, 9).

28. A vehicle as claimed in one or more of the preceding claims, **characterized in that** an additional pair of tool-carrying actuator cylinders (19, 19') are provided, situated substantially in an intermediate position between the median transverse axis of the vehicle and the second end (4) thereof, and placed symmetrically at opposite sides with reference to the median longitudinal axis (10) of the vehicle.

29. A vehicle as claimed in one or more of the preceding claims, **characterized in that** it comprises at least one crane (21), preferably a pair of whirly cranes (21, 21') for supporting tools to be used to service the line.

30. A vehicle as claimed in one or more of the preceding claims, **characterized in that** each crane (21, 21') is provided at a corner area of the first end (2) of the vehicle.

31. A vehicle as claimed in one or more of the preceding claims, **characterized in that** each actuator cylinder (19, 19', 20) and each whirly crane (21, 21') have means for removably securing a tool at their upper end.

32. A vehicle as claimed in one or more of the preceding claims, **characterized in that** these means for removable tool lock may consist of standardized holes or interlocks for a tool engaging or fastening foot or end.

33. A vehicle as claimed in one or more of the preceding claims, **characterized in that** these tools may include a unit for guiding and slidably supporting carrying cables or contact wires and/or a unit for temporarily detaching and supporting far from the supporting arms the contact wire and/or the carrying cable, and/or the like.

34. A vehicle as claimed in one or more of the preceding claims, **characterized in that** it is of the motor-driven type, may also have one or more dedicated operating cabs (3, 5) and may be pulled or pushed by a separate tractor.

35. A vehicle to be used in construction or maintenance work on overhead systems (17) of railway, tramway, subway lines, or the like, comprising a truck adapted to run on rails, whereon at least one operating platform (8) is fitted, which may be lifted upwards enough to reach the uppermost parts of the suspension structure (17), or the like, and lowered, said platform (8) being able to be lifted and rotated about a vertical axis.

36. A vehicle as claimed in claim 35, **characterized in that** the platform (8) has extension means on at least one of the end sides.

37. A vehicle as claimed in claim 35 or 36, **characterized in that** the platform rotates about an axis which is eccentric with respect to the plan shape thereof.

38. A vehicle as claimed in claim 35 or 36, **characterized in that** the platform rotates about an axis which is within the plan shape thereof.

39. A vehicle as claimed in claim 35 through 38, **characterized in that** the platform rotates about an axis which is substantially coincident with the axis of the lifting means.

40. A vehicle as claimed in one or more of claims 35 through 39, **characterized in that** the platform and/or the lifting means may be translated in at least one direction transverse to the axis of the track.
